# EUROPÄISCHE PATENTANMELDUNG

(11) **EP 3 620 674 A1**
(43) Veröffentlichungstag der Anmeldung: **11.03.2020**
(21) Anmeldenummer: 19196300.8
(22) Anmeldetag: 10.09.2019
(51) Int. Cl.: F16B 43/00, B33Y 80/00

(54) **ZWISCHENBLECH**

(30) Priorität: 10.09.2018 DE 102018215360
(71) Anmelder: MTU Aero Engines AG, 80995 München (DE)
(72) Erfinder: Dusel, Karl-Heinz, 85716 Unterschleißheim (DE)

(57) **Zusammenfassung**

Die vorliegende Erfindung betrifft ein einstückiges Zwischenblech mit einer ersten Schicht (10), die eine erste Außenfläche mit einem ersten Außenflächenbereich (11) aufweist, und einer zweiten Schicht (20), die integral mit der ersten Schicht ausgebildet ist und eine zweite Außenfläche mit einem zweiten Außenflächenbereich (21) aufweist, wobei die erste und zweite Außenfläche gegenüberliegende, insbesondere parallele, Außenflächen des Zwischenblechs bilden und eine Härte des ersten Außenflächenbereichs geringer als eine Härte des zweiten Außenflächenbereichs und/oder ein Elastizitätsmodul der ersten Schicht geringer als ein Elastizitätsmodul der zweiten Schicht ist.

## Beschreibung

Die vorliegende Erfindung betrifft ein einstückiges Zwischenblech, dessen Herstellung und Verwendung sowie eine Bauteilanordnung mit dem Zwischenblech.

Zwischenbleche werden beispielsweise als Unterlegscheiben zwischen einem Schraubenkopf bzw. einer Mutter und einer Außenfläche eines zu verschraubenden Bauteils angeordnet.

Insbesondere, wenn dieses Bauteil gegossen oder additiv hergestellt ist, muss hierzu bislang häufig ein Kontaktbereich seiner zunächst rauen Außenfläche spanend nachbearbeitet werden, um eine glatte Auflagefläche für die Unterlegscheibe zu schaffen.

Eine Aufgabe einer Ausführung der vorliegenden Erfindung ist es, ein verbessertes Zwischenblech bzw. eine verbesserte Bauteilanordnung mit wenigstens einem Zwischenblech zur Verfügung zu stellen.

Diese Aufgabe wird durch ein Zwischenblech mit den Merkmalen des Anspruchs 1 gelöst. Ansprüche 7, 9 und 10 stellen eine Bauteilanordnung mit einem oder mehreren hier beschriebenen Zwischenblechen bzw. die Herstellung bzw. Verwendung eines hier beschriebenen Zwischenbleches unter Schutz. Vorteilhafte Ausführungsformen der Erfindung sind Gegenstand der Unteransprüche.

Nach einer Ausführung der vorliegenden Erfindung weist ein einstückiges bzw. -teiliges Zwischenblech eine erste Schicht mit einer ersten Außenfläche (des Zwischenblechs) und eine zweite Schicht auf, die integral mit der ersten Schicht ausgebildet ist bzw. wird und eine zweite Außenfläche aufweist, wobei die erste und zweite Außenfläche gegenüberliegende, in einer Ausführung parallele, Außenflächen des Zwischenblechs bilden und die erste Außenfläche einen ersten Außenflächenbereich und die zweite Außenfläche einen zweiten Außenflächenbereich aufweist. Der erste Au-βenflächenbereich kann ein(en) Teil der ersten Außenfläche oder auch die gesamte erste Außenfläche aufweisen bzw. sein, der zweite Außenflächenbereich ein(en) Teil der zweiten Außenfläche oder auch die gesamte zweite Außenfläche.

Nach einer Ausführung der vorliegenden Erfindung ist eine Härte des ersten Außenflächenbereichs geringer als eine Härte des zweiten Außenflächenbereichs, in einer Ausführung beträgt eine Härte des ersten Außenflächenbereichs höchstens 90%, insbesondere höchstens 75%, in einer Ausführung höchstens 50%, einer Härte des zweiten Außenflächenbereichs.

Zusätzlich oder alternativ ist nach einer Ausführung der vorliegenden Erfindung ein Elastizitätsmodul der ersten Schicht geringer als ein Elastizitätsmodul der zweiten Schicht, in einer Ausführung beträgt ein Elastizitätsmodul der ersten Schicht höchstens 90%, insbesondere höchstens 75%, in einer Ausführung höchstens 50%, eines Elastizitätsmoduls der zweiten Schicht.

Hierdurch kann in einer Ausführung jeweils, insbesondere in Kombination, der erste Außenflächenbereich vorteilhaft Ungleichförmigkeiten einer, insbesondere nicht nachbearbeiteten, Außenfläche eines ersten Bauteils einer Bauteilanordnung wenigstens teilweise, in einer Ausführung elastisch und/oder plastisch, ausgleichen, und zugleich der zweite Außenflächenbereich eine demgegenüber härtere bzw. steifere Auflage für ein zweites Bauteils der Bauteilanordnung zur Verfügung stellen.

Dadurch können in einer Ausführung eine, insbesondere spanende, Nachbearbeitung zur Herstellung einer glatten Auflagefläche an dem ersten Bauteil entfallen und/oder Kräfte, insbesondere Reib- und/oder Druckkräfte besser, insbesondere homogener, übertragen bzw. verteilt werden. In einer Ausführung kann durch elastisches und/oder plastisches Verformen der ersten Schicht bzw. des ersten Außenflächenbereichs ein Formschluss mit (Unebenheiten) des ersten Bauteils bzw. dessen Kontakt- bzw. Außenfläche realisiert werden bzw. sein.

Unter einer Härte eines Außenflächenbereichs wird vorliegend insbesondere in fachüblicher Weise der mechanische Widerstand verstanden, den dieser Flächenbereich dem mechanischen Eindringen eines anderen Körpers entgegensetzt.

Entsprechend ist in einer Ausführung (die Härte des ersten und zweiten Außenflächenbereich so, dass) die Druckkraft, die erforderlich ist, um einen gegen den ersten Außenflächenbereich drückenden Prüfkörper, insbesondere eine Hartmetallkugel, vorzugsweise mit einem Durchmesser von 10 mm, 5 mm, 2,5 mm oder 1 mm, um eine vorgegebene Strecke, insbesondere 0,1 mm, 0,5 mm, 1 mm oder 2 mm, in diesen Außenflächenbereich bzw. die erste Schicht einzudrücken, geringer (ist) als die Druckkraft, die erforderlich ist, um den gleichen, gegen den zweiten Außenflächenbereich drückenden Prüfkörper um die gleiche vorgegebene Strecke in diesen Au-βenflächenbereich bzw. die zweite Schicht einzudrücken, insbesondere (um) wenigstens 25%, in einer Ausführung (um) wenigstens 50% geringer.

Die Härte des ersten und zweiten Außenflächenbereichs wird in einer Ausführung mit demselben Messverfahren, insbesondere bei derselben Temperatur, in einer Ausführung bei 20°C, und/oder gemäß DIN EN ISO 14577, DIN EN ISO 6508-1, EN ISO 6506-1 bis EN ISO 6506-4 oder DIN EN ISO 6507-1:2005 bis -4:2005 gemessen, sie kann insbesondere die Martens- bzw. Universalhärte sein.

In einer Ausführung sind zwischen der ersten Schicht und der zweiten Schicht eine oder mehrere weitere Schichten angeordnet, wodurch in einer Ausführung die Kraftverteilung (weiter) verbessert werden kann. Insbesondere kann wenigstens eine dieser Schichten einen Elastizitätsmodul aufweisen, der von dem Elastizitätsmodul der ersten Schicht und dem Elastizitätsmodul der zweiten Schicht verschieden ist.

In einer anderen Ausführung grenzen erste und zweite Schicht aneinander bzw. sind einander benachbart, wodurch in einer Ausführung das Zwischenblech flach(er) bauen kann.

In einer Ausführung beträgt eine, insbesondere minimale, maximale und/oder mittlere, Schichtdicke der ersten Schicht wenigstens 50%, in einer Ausführung wenigstens 100%, insbesondere wenigstens 150%, und/oder höchstens 200%, insbesondere höchstens 150%, in einer Ausführung höchstens 100%, insbesondere höchstens 50%, einer, insbesondere minimalen, maximalen und/oder mittleren, Schichtdicke der zweiten Schicht.

In einer Ausführung wird bzw. ist die erste Schicht und/oder die zweite Schicht, in einer Ausführung das Zwischenblech, mittels additiver Fertigung bzw. eines generativen Herstellungsverfahrens hergestellt, bei dem in einer Ausführung das Zwischenblech bzw. die erste und/oder zweite Schicht lageweise durch lokales Verfestigen von losem Ausgangsmaterial unter Verbinden mit einer darunterliegenden Lage hergestellt wird.

Dadurch können in einer Ausführung die erste und zweite Schicht besonders vorteilhaft integral miteinander ausgebildet und/oder unterschiedliche Härten bzw. Elastizitätsmoduli realisiert werden.

In einer Ausführung sind/ist bzw. werden/wird die erste und zweite Schicht, insbesondere das Zwischenblech, aus demselben Werkstoff, insbesondere Metall und/oder Kunststoff, hergestellt. Dabei können unterschiedliche Härten bzw. Elastizitätsmodule insbesondere durch entsprechend(variiert)e Parameter der additiven Fertigung bzw. des generativen Herstellungsverfahrens realisiert werden.

Dadurch können in einer Ausführung die erste und zweite Schicht besonders rasch und/oder homogen hergestellt werden.

In einer Ausführung ergeben sich die unterschiedlichen Härten bzw. Elastizitätsmodule bei gleichem oder unterschiedlichem Material der ersten und zweiten Schicht aufgrund eines Unterschieds in der Schicht- und/oder Oberflächenstruktur, insbesondere aufgrund einer unterschiedlichen Materialanordnung und/oder einer unterschiedlichen Porosität. Beispielsweise kann die erste Schicht eine höhere Porosität als die zweite Schicht aufweisen, beispielsweise aufgrund einer netzartigen Struktur, und/oder kann verformbare Oberflächenstrukturen, wie filigrane Stege oder Vorsprünge, aufweisen.

In einer anderen Ausführung weisen bzw. weist die erste und zweite Schicht, insbesondere das Zwischenblech, unterschiedliche Werkstoffe, insbesondere Metalle und/oder Kunststoffe, auf. Dies kann insbesondere durch einen Werkstoffwechsel bei der additiven Fertigung bzw. während des generativen Herstellungsverfahrens realisiert werden.

Dadurch können in einer Ausführung die erste und zweite Schicht besonders prozesssicher hergestellt und/oder Härten bzw. Elastizitätsmoduli stärker variiert werden.

Die erste und/oder zweite Schicht kann (jeweils) mehrere additiv hergestellte Lagen aufweisen oder auch aus einer einzigen additiv hergestellten Lage bestehen.

In einer Ausführung beträgt ein Mittenrauwert Ra nach DIN EN ISO 4287:2010 des zweiten Außenflächenbereichs höchstens 3 µm, insbesondere höchstens 1 µm. Mit anderen Worten ist in einer Ausführung der zweite Außenflächenbereich glatt.

Dadurch kann in einer Ausführung eine besonders vorteilhafte Auflagefläche für das zweite Bauteil zur Verfügung gestellt bzw. die Kraftübertragung zwischen zweitem Bauteil und Zwischenblech (weiter) verbessert werden.

In einer Ausführung beträgt eine, insbesondere minimale, maximale und/oder mittlere, Wandstärke des Zwischenblechs (gemessen) senkrecht zur ersten und/oder zweiten Außenfläche höchstens 15%, insbesondere höchstens 10%, einer Quadratwurzel des Flächeninhalts dieser Außenfläche. Mit anderen Worten ist in einer Ausführung das Zwischenblech flach.

Dadurch kann in einer Ausführung eine besonders kompakte Bauteilanordnung realisiert werden.

In einer Ausführung weist die erste Schicht und/oder die zweite Schicht, insbesondere das Zwischenblech, wenigstens eine Durchgangsbohrung auf. Zusätzlich oder alternativ weist die erste Schicht und/oder die zweite Schicht, insbesondere das Zwischenblech eine kreisförmige Außenkontur auf. Insbesondere kann das Zwischenblech somit eine Unterlegscheibe bilden, was eine besonders vorteilhafte Verwendung darstellt, ohne dass die Erfindung hierauf beschränk ist.

Nach einer Ausführung der vorliegenden Erfindung weist eine Bauteilanordnung ein, in einer Ausführung mittels Gießen oder additiver Fertigung hergestelltes, erstes Bauteil und ein damit, insbesondere reibschlüssig und/oder zerstörungsfrei lösbar, verbundenes, insbesondere verspanntes, in einer Ausführung verschraubtes oder vernietetes, zweites Bauteil, insbesondere ein Verbindungselement, in einer Ausführung eine(n) Schraube(nkopf), eine Mutter, einen Niet(kopf) oder dergleichen, sowie wenigstens ein hier beschriebenes Zwischenblech auf, das so bzw. derart zwischen dem ersten und zweiten Bauteil angeordnet, in einer Ausführung eingespannt, insbesondere durch das erste und zweite Bauteil elastisch und/oder plastisch komprimiert, ist bzw. wird, dass es mit seinem ersten Außenflächenbereich eine Außenfläche des ersten Bauteils und mit seinem zweiten Außenflächenbereich eine Außenfläche des zweiten Bauteils, in einer Ausführung flächig, kontaktiert.

In einer Ausführung ist ein Mittenrauwert Ra nach DIN EN ISO 4287:2010 der den ersten Außenflächenbereich des Zwischenblechs kontaktierenden Außenfläche des ersten Bauteils (um) wenigstens 1 µm größer als ein Mittenrauwert Ra nach DIN EN ISO 4287:2010 des zweiten Außenflächenbereichs und/oder beträgt wenigstens 4 µm.

Hierdurch können in einer Ausführung vorteilhaft Ungleichförmigkeiten der Außenfläche des ersten Bauteils besonders vorteilhaft wenigstens teilweise, in einer Ausführung elastisch und/oder plastisch, ausgeglichen und/oder zugleich eine glatte(re) Auflagefläche für das zweite Bauteil zur Verfügung gestellt werden.

In einer Ausführung wird die zweite Schicht vor der ersten Schicht ausgebildet, insbesondere bei der additiven Herstellung.

Dadurch kann in einer Ausführung die additive Herstellung, insbesondere ihre Prozesssicherheit und/oder -geschwindigkeit, verbessert werden.

In einer Ausführung kann der zweite Außenflächenbereich, insbesondere die zweite Außenfläche, mittels Erodieren, insbesondere Drahterodieren, hergestellt sein bzw. werden. Insbesondere wenn die erste und zweite Schicht additiv gefertigt sind bzw. werden, können diese gemeinsam mittels (Draht)Erodieren entlang einer Grenze der zweiten Schicht vereinzelt oder abgetrennt werden, beispielsweise von einer Plattform einer Vorrichtung zur additiven Fertigung oder von einem anderen gemeinsam additiv gefertigtem Materialabschnitt.

Mittels Erodieren kann das Zwischenblech abgetrennt werden und gleichzeitig eine besonders glatte Fläche hergestellt werden, ohne dass ein weiteres Nachbearbeiten erforderlich ist.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Schritt eines Verfahrens zum Herstellen eines Zwischenblechs nach einer Ausführung der vorliegenden Erfindung;
- Fig. 2: einen weiteren Schritt des Verfahrens; und
- Fig. 3: eine Bauteilanordnung mit dem Zwischenblech bzw. dessen Verwendung nach einer Ausführung der vorliegenden Erfindung.

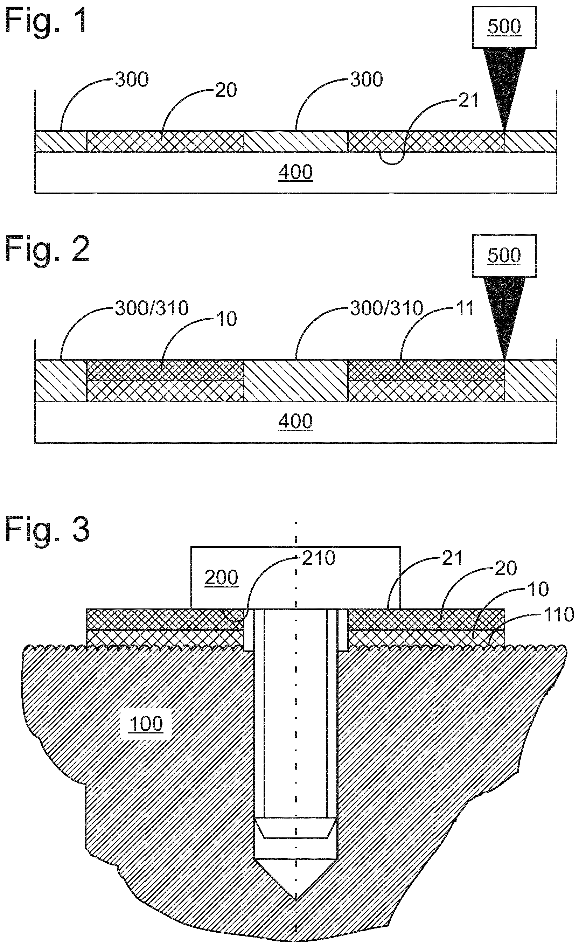

Fig. 1 zeigt einen Schritt eines Verfahrens zum Herstellen eines Zwischenblechs nach einer Ausführung der vorliegenden Erfindung.

In an sich bekannter Weise wird ein loser Ausgangswerkstoff 300 lageweise auf einer Plattform 400 angeordnet und lokal, beispielsweise durch einen Laser 500, verfestigt, um zunächst eine zweite Schicht 20 eines Zwischenblechs auszubilden, die eine zweite Außenfläche 21 des Zwischenblechs bildet, welche einen zweiten Au-βenflächenbereich darstellt.

In einem anschließenden, in Fig.2 angedeuteten Verfahrensschritt wird in einer Ausführung der gleiche lose Ausgangswerkstoff 300 lageweise auf der zweiten Schicht

20 angeordnet und lokal verfestigt, um eine erste Schicht 10 des Zwischenblechs auszubilden, die eine erste Außenfläche 11 des Zwischenblechs bildet, welche einen ersten Außenflächenbereich darstellt.

Dabei werden Parameter dieser additiven Herstellung derart variiert, dass eine Härte des ersten Außenflächenbereichs 11 geringer als eine Härte des zweiten Außenflächenbereichs 21 und/oder ein Elastizitätsmodul der ersten Schicht 10 geringer als ein Elastizitätsmodul der zweiten Schicht 20 ist.

In einer anderen Ausführung wird in dem in Fig. 2 angedeuteten Verfahrensschritt ein anderer loser Ausgangswerkstoff 310 schichtweise auf der zweiten Schicht 20 angeordnet und lokal verfestigt, um die erste Schicht 10 des Zwischenblechs auszubilden, die die erste Außenfläche 11 des Zwischenblechs bildet, welche den ersten Au-βenflächenbereich darstellt.

Nach Entfernen des nicht verfestigten Ausgangswerkstoffs und Entnahme von der Plattform wird die solcherart additiv hergestellte Unterlegscheibe zwischen einem ersten Bauteil 100 und einem zweiten Bauteil in Form einer Schraube bzw. deren Schraubenkopf 200 angeordnet, wobei die Schraube eine Durchgangsbohrung der Unterlegscheibe durchgreifend in das ersten Bauteil eingeschraubt wird.

Wie in Fig. 3 übertrieben dargestellt, ist die unbearbeitete Außenfläche 110 des ersten Bauteils rau. Diese Ungleichförmigkeit wird jedoch durch die bzw. den weichere(n) erste Schicht 10 bzw. Außenfläche(nbereich) 11 vorteilhaft ausgeglichen und zugleich der Außenfläche 210 der bzw. des Schraube(nkopfes) eine harte und glatte Auflagefläche in Form der bzw. des zweiten Außenfläche(nbereichs) 21 zur Verfügung gestellt.

Dadurch kann die Nachbearbeitung der Außenfläche 110 entfallen und eine Kraftverteilung bzw. -leitung verbessert werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: erste Schicht
- 11: erste(r) Außenfläche(nbereich)
- 20: zweite Schicht
- 21: zweite(r) Außenfläche(nbereich)
- 100: erstes Bauteil
- 110: Außenfläche
- 200: zweites Bauteil
- 210: Außenfläche
- 300: Ausgangswerkstoff
- 310: weiterer Ausgangswerkstoff
- 400: Plattform
- 500: Laser

## Patentansprüche

1. Einstückiges Zwischenblech mit einer ersten Schicht (10), die eine erste Außenfläche mit einem ersten Außenflächenbereich (11) aufweist, und einer zweiten Schicht (20), die integral mit der ersten Schicht ausgebildet ist und eine zweite Außenfläche mit einem zweiten Außenflächenbereich (21) aufweist, wobei die erste und zweite Außenfläche gegenüberliegende, insbesondere parallele, Außenflächen des Zwischenblechs bilden und eine Härte des ersten Außenflächenbereichs geringer als eine Härte des zweiten Außenflächenbereichs und/oder ein Elastizitätsmodul der ersten Schicht geringer als ein Elastizitätsmodul der zweiten Schicht ist.

2. Zwischenblech nach dem vorhergehenden Anspruch, **dadurch gekennzeichnet, dass** sich die geringere Härte bzw. das geringere Elastizitätsmodul des ersten Außenflächenbereichs aufgrund eines Unterschieds in der Schicht- und/oder Oberflächenstruktur, insbesondere aufgrund einer unterschiedlichen Materialanordnung und/oder unterschiedlicher Porosität, ergibt.

3. Zwischenblech nach einem der vorhergehenden Ansprüche, **dadurch gekennzeichnet, dass** die erste und/oder zweite Schicht, insbesondere das Zwischenblech, mittels additiver Fertigung hergestellt ist und/oder der zweite Außenflächenbereich (21), insbesondere die zweite Außenfläche, mittels Erodieren, insbesondere Drahterodieren, hergestellt ist.

4. Zwischenblech nach einem der vorhergehenden Ansprüche, **dadurch gekennzeichnet, dass** die erste und zweite Schicht, insbesondere das Zwischenblech, aus demselben Werkstoff hergestellt sind oder unterschiedliche Werkstoffe aufweisen.

5. Zwischenblech nach einem der vorhergehenden Ansprüche, **dadurch gekennzeichnet, dass** ein Mittenrauwert Ra nach DIN EN ISO 4287:2010 des zweiten Außenflächenbereichs höchstens 3 µm beträgt.

6. Zwischenblech nach einem der vorhergehenden Ansprüche, **dadurch gekennzeichnet, dass** eine Wandstärke des Zwischenblechs senkrecht zur ersten und/oder zweiten Außenfläche höchstens 15% einer Quadratwurzel des Flächeninhalts dieser Außenfläche beträgt.

7. Zwischenblech nach einem der vorhergehenden Ansprüche, **dadurch gekennzeichnet, dass** die erste und/oder zweite Schicht, insbesondere das Zwischenblech, wenigstens eine Durchgangsbohrung und/oder eine kreisförmige Außenkontur aufweist.

8. Bauteilanordnung mit einem, insbesondere mittels Gießen oder additiver Fertigung hergestellten, ersten Bauteil (100) und einem damit, insbesondere reibschlüssig und/oder zerstörungsfrei lösbar, verbundenen zweiten Bauteil (200) sowie wenigstens einem Zwischenblech nach einem der vorhergehenden Ansprüche, das so zwischen dem ersten und zweiten Bauteil angeordnet ist, dass es mit seinem ersten Außenflächenbereich (11) eine Außenfläche (110) des ersten Bauteils und mit seinem zweiten Außenflächenbereich (21) eine Außenfläche (210) des zweiten Bauteils, insbesondere flächig, kontaktiert.

9. Bauteilanordnung nach dem vorhergehenden Anspruch, **dadurch gekennzeichnet, dass** ein Mittenrauwert Ra nach DIN EN ISO 4287:2010 der den ersten Außenflächenbereich des Zwischenblechs kontaktierenden Außenfläche des ersten Bauteils wenigstens 1 µm größer als ein Mittenrauwert Ra nach DIN EN ISO 4287:2010 des zweiten Außenflächenbereichs ist und/oder wenigstens 4 µm beträgt.

10. Verwendung eines Zwischenblechs nach einem der vorhergehenden Ansprüche, **dadurch gekennzeichnet, dass** es zwischen den zwei einander zugewandten Außenflächen (110, 210) der beiden Bauteile (100, 200) einer Bauteilanordnung nach einem der vorhergehenden Ansprüche angeordnet wird.

11. Verfahren zum Herstellen eines Zwischenblechs nach einem der vorhergehenden Ansprüche, **dadurch gekennzeichnet, dass** die zweite Schicht (20) integral mit, insbesondere vor, der ersten Schicht (10), insbesondere mittels additiver Fertigung, ausgebildet wird.

12. Verfahren nach Anspruch 10, **dadurch gekennzeichnet, dass** der zweite Außenflächenbereich (21) hergestellt wird, indem die additiv gefertigte erste und zweite Schicht (10 und 20) mittels Erodieren, insbesondere Drahterodieren, entlang einer Grenze der zweiten Schicht insbesondere von einer Plattform getrennt werden.
